# EUROPÄISCHE PATENTANMELDUNG

(11) **EP 1 739 392 A1**
(43) Veröffentlichungstag der Anmeldung: **03.01.2007**
(21) Anmeldenummer: 05405415.0
(22) Anmeldetag: 28.06.2005
(51) Int. Cl.: G01C 9/24, G01C 17/04

(54) **Mehrzweckmessgerät zur Neigungs- und Winkellagenmessung und dessen Verwendung**

(71) Anmelder: Negru, Savian, 8404 Winterthur (CH)
(72) Erfinder: Negru, Savian, 8404 Winterthur (CH)
(74) Vertreter: Hammer, Bruno

(57) **Zusammenfassung**

Das als Mehrzweckmessgerät ausgebildete Messgerät (1) weist eine Wasserwaage mit einer oder mehreren Messflächen (13, 14, 15, 16, 17, 18) auf, sowie ein Messorgan zum Bestimmen der Winkellage einer Messfläche (13, 14, 15, 16, 17, 18) des Messgeräts (1) gegenüber einer Fläche oder einer Kante eines Objektes. Als Messorgan zum Bestimmen der Winkellage eignen sich beispielsweise Kompasse (3) oder Laser-Distanzmessgeräte.

## Beschreibung

Die Erfindung bezieht sich auf ein Messgerät nach dem Oberbegriff des unabhängigen Anspruchs 1 sowie auf die Verwendung des Messgeräts zum zueinander Ausrichten von Objekten.

Gewöhnliche Wasserwaagen weisen eine oder mehrere sogenannte Libellen auf und werden für das horizontale, bzw. vertikale Ausrichten von Objekten wie Mauern und Wänden, Pfählen, Möbeln, Bildern und beliebigen Gegenständen verwendet. Die Libellen sind gegenüber der einen oder den mehreren Messflächen der Wasserwaage exakt ausgerichtet.

Die Wasserwaage, auch Richtwaage oder Setzwaage genannt, besteht z.B. aus einem quaderförmigen Profil. Alle oder einzelne Oberflächen der Wasserwaage sind als die Messflächen oder Referenzflächen ausgebildet, welche an die zu messenden Objekte angelegt werden. Die Libelle, das eigentliche Messorgan, ist zu einer oder mehreren Messflächen exakt ausgerichtet. Die Libelle, besteht in ihrer klassischen Ausführung aus einem leicht gekrümmten Glasrohr (Röhrenlibelle) oder einer Glasdose mit leicht kugeligem Deckel (Dosenlibelle) die bis auf eine kleine Gasblase mit Alkohol, Äther oder einer anderen Flüssigkeit gefüllt ist. Die Flüssigkeit ist oft gefärbt. Bei horizontaler Lage der Libelle steht die Gasblase in der Mitte zwischen zwei radial angebrachten Marken. Oft sind weitere Marken vorhanden, welche z.B. Abweichungen von einem Winkelgrad von der Horizontalen, bzw. Vertikalen entsprechen. Bei Dosenlibellen ist die Horizontale erreicht, wenn sich die Gasblase in einer Kreismarke, die sich auf dem kugelförmigen Deckel befindet. Abweichungen von der Horizontalen werden bei dieser Ausführungsform mit konzentrischen Kreismarken angezeigt.

Es sind auch Wasserwaagen bekannt, in denen die Libelle oder die Libellen drehbar sind, was es erlaubt, die Winkellage eines Objekts zur Horizontalen und oder zur Vertikalen zu messen und das Objekt nach dieser Winkellage auszurichten.

Wasserwaagen sind zwar geeignet, Objekte bzw. Kanten und Flächen horizontal, vertikal oder in einem Winkel zur Horizontalen oder zur Vertikalen auszurichten. Diese Wasserwaagen sind jedoch nur in Spezialfällen geeignet, die Winkellage von Oberflächen und Kanten von Objekten zueinander zu messen und auszurichten. Für die Messung und Bestimmung der Lage eines z.B. in einem Raum angeordneten Möbels zu einer Wand dieses Raumes, ist die Wasserwaage nur sehr beschränkt tauglich. So kann beispielsweise mit der Wasserwaage bestimmt werden, ob eine Oberfläche oder Kante eines Objekts, z.B. eines Tischs parallel zu Boden und Decke liegt, jedoch nicht die Lage einer Kante oder Oberfläche des Tischs zu einer Wand oder zu eine Fläche oder Kante eines anderen Objekts, wie z.B. einem Schrank.

Derartige Aufgaben können mit einem Messgerät nach der Erfindung gelöst werden, welches zu einem Mehrzweckmessgerät erweitert wird. Erfindungsgemäss weist das Messgerät nach der Erfindung die Merkmale des kennzeichnenden Teils des unabhängigen Anspruchs 1 auf. Die abhängigen Ansprüche beziehen sich auf vorteilhafte Weiterbildungen der Erfindung. Die Verwendung des Messgeräts erfolgt nach den Verfahrensschritten des unabhängigen Anspruchs 7.

Bei der Arbeit auf Baustellen von Gebäuden, aber auch im Alltag kommt es häufig vor, dass Objekte wie Lampen, z.B. Fluoreszenz-Leuchten, zu einer Wand eines Raumes ausgerichtet und exakt horizontal oder vertikal oder in einem bestimmten Winkel montiert werden müssen. Bisher sind z.B. für das horizontale Ausrichten und das parallele Anordnen zu eine Wand an der Decke zwei Messgeräte erforderlich. Die Person, welche die Arbeit ausführt steht meist auf einer Leiter oder einem Gerüst und arbeitet über Kopf, muss zudem Löcher für Befestigungsschrauben bohren. Den Abstand z.B. zu einer Wand und die parallele Anordnung zu dieser Wand verlangt Vorarbeiten mit Metermass, mehrmaliges Auf- und Absteigen auf der Leiter was alles allein schon für sich mühsam und zeitaufwendig sind. Das horizontale Positionieren der Leuchte kann erst nach diesen aufwendigen Vorarbeiten mit der Wasserwaage erfolgen.

Die gleiche Arbeit wird wesentlich vereinfacht, wenn dazu das neue Messgerät nach der vorliegenden Erfindung verwendet wird. Die Person, welche die Arbeit ausführt, bestimmt mit dem Messgerät die Richtung der Kante oder der Fläche, nach welcher ausgerichtet werden soll, d.h. die Person bestimmt das Azimut dieser Fläche oder Kante, also beispielsweise einer Wand des Raums. Dies geschieht durch das Anlegen einer horizontal gehaltenen Messfläche des Messgeräts an die Wand des Raums und das Ablesen des Azimuts auf der Skala des Kompasses. Das horizontale Halten des Messgeräts ist bei Messgeräten mit einem einfachen Kompass äusserst wichtig und wird mit der Libelle der Wasserwaage bestimmt. Das Positionieren beispielsweise wieder einer Fluoreszenz-Leuchte, wird mit dem neuen Messgerät stark vereinfacht, indem die Messfläche des Messgeräts an der Decke, im Bereich wo die Leuchte montiert werden soll, nach dem vorher bestimmten Azimut ausgerichtet und gehalten wird. Dann wird die Basis der Leuchte mit einer Fläche an die Messkante des Messgeräts angelegt, womit die Basis und damit die Leuchte parallel zur Wand ausgerichtet ist und in der so bestimmten Lage montiert werden kann. Das parallele Ausrichten der Leuchte zur Wand durch mühsames Messen des Abstands zur Wand und das zeitaufwendige "die Leiter Hinauf und Hinunter" entfallen.

Das neue Messgerät nach der Erfindung wir anhand der schematischen Zeichnungen eines Ausführungsbeispiels näher erläutert.

Es zeigen:
- Fig. 1: die Aufsicht auf ein Mehrzweckmessgerät mit zwei Libellen und einem Kompass
- Fig. 2: eine Seitenansicht des Mehrzweckmessgeräts von Fig. 1

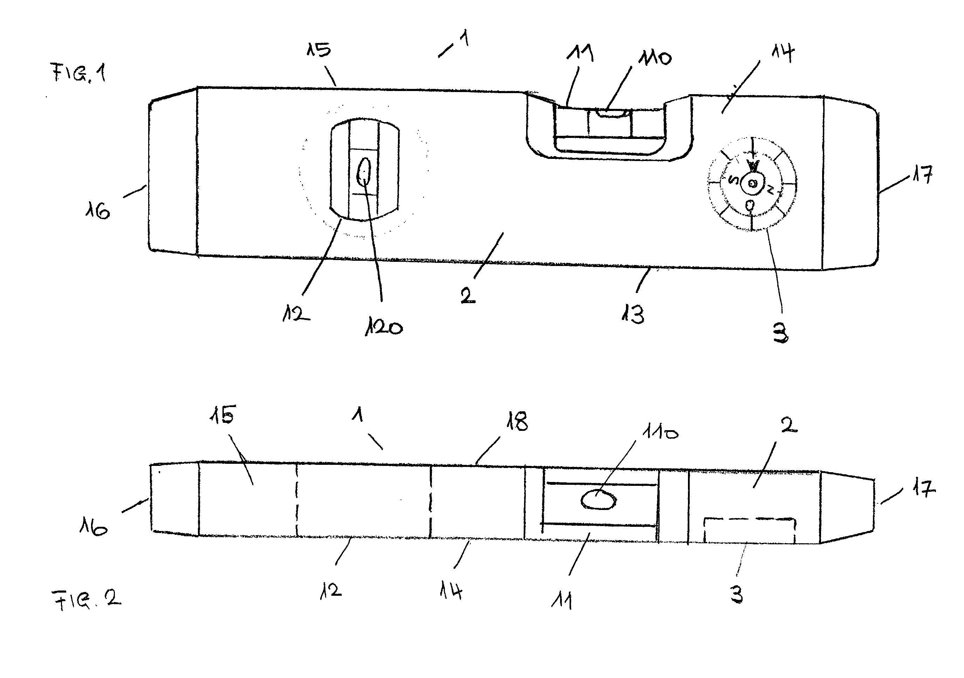

Fig. 1 und Fig.2 zeigen das Messgerät 1 mit den beiden in einem Winkel von 90° zueinander angeordneten Libellen 11 und 12 einer Wasserwaage. Der Basiskörper 2 des Messgeräts hat im wesentlichen die Form eines Quaders in welchem die beiden Libellen 11 und 12 eingebaut sind. Die Libellen 11 und 12 mit den Gasblasen 110 bzw. 120 können so angeordnet und ausgebildet sein, dass alle sechs Oberflächen 13, 14, 15, 16, 17, 18 des Basiskörpers als Messfläche für die Wasserwaage dienen können. Im gezeigten Beispiel sind die Libellen 11 und 12 so eingebaut, dass nur die vier Oberflächen 13, 14, 15, und 18 als Messflächen dienen. Um auch die beiden Stirnflächen 16 und 17 als Messflächen zu nutzen, wäre z.B. der Einbau einer dritten Libelle im Basiskörper 2 vorzusehen.

In der Oberfläche 14 des Basiskörpers 2 ist ein Kompass 3 in den Basiskörper 2 eingebaut. Der Kompass 3 ist so in den Basiskörper 2 eingebaut, dass die Oberfläche des Kompasses 3 mit der Oberfläche / Messfläche 14 fluchtet. Die beiden Messflächen 13 und 15 und wegen Ihrer bescheidenen Länge in beschränktem Masse auch die Messflächen 16 und 17, können als Messflächen für den Kompass 3 dienen, um die Richtung, d.h. das Azimut einer Kante oder Oberfläche eines ersten Objekts z.B. der Wand eines Zimmers zu bestimmen, zu welcher ein zweites Objekt, z.B. eine Fluoreszenz-Leuchte, parallel oder in einem vorgegebenen Winkel ausgerichtet werden soll.

Der Kompass 3 und/oder eine oder beide Libellen 11, 12 können drehbar eingebaut sein. Der Kompass 3 kann ein beliebiger Kompass sein, beispielsweise ein Kugelkompass d.h. ein Magnetkompass, der unabhängig von der Lage des Messgeräts arbeitet, oder ein digitaler Kompass.

An Stelle des Kompasses oder zusätzlich kann auch Distanzmessgerät, z.B. ein Laser-Distanzmessgerät vorgesehen sein, mit welchem in Verbindung mit der Wasserwaage der Abstand einer Messfläche des Messgeräts oder die Entfernung der Messfläche des Messgeräts zu Punkten einer Fläche eines ersten Objekts bestimmt wird. Auch in diesem Fall, wird die Lage eines zweiten Objekts zur Fläche des ersten Objekts durch das Anlegen des zweiten Objekts an die Messfläche des Messgeräts bestimmt. Die Winkellage wird also bei dieser hier nicht in Figuren gezeigten Ausführungsform durch das Messen des Abstands bzw. der Entfernung von mindestens zwei Punkten einer Messfläche des Messgeräts bestimmt. Ein Messgerät könnte auch zwei Laser-Distanzmessgeräte aufweisen, was die Arbeit mit dem Messgerät noch weiter vereinfachen würde, indem gleichzeitig die Entfernung zu zwei Punkten auf der Fläche des ersten Objekts gemessen und auch eingestellt werden.

Das als Mehrzweckmessgerät ausgebildete Messgerät 1 weist eine Wasserwaage mit einer oder mehreren Messflächen 13, 14, 15, 16, 17, 18 auf, sowie ein Messorgan zum Bestimmen der Winkellage einer Messfläche 13, 14, 15, 16, 17, 18 des Messgeräts 1 gegenüber einer Fläche oder einer Kante eines Objektes. Als Messorgan zum Bestimmen der Winkellage eignen sich beispielsweise Kompasse (3) oder Laser-Distanzmessgeräte.

## Patentansprüche

1. Messgerät (1), als Mehrzweckmessgerät ausgebildet, mit einer Wasserwaage mit einer oder mehreren Messflächen (13, 14, 15, 16, 17, 18), **gekennzeichnet durch** ein weiteres Messorgan (3) zum Bestimmen der Winkellage einer Messfläche (13, 14, 15, 16, 17, 18) des Messgeräts (1) zu einer Fläche oder zu einer Kante eines Objektes.

2. Messgerät nach Anspruch 1, bei welchem das Messorgan zum Bestimmen der Winkellage ein Kompass (3) ist.

3. Messgerät nach Anspruch 1, bei welcher das Messorgan zum Bestimmen der Winkellage mindestens ein Distanzmessgeräte ist, das Distanzen zu Flächen oder Kanten von Objekten bestimmt.

4. Messgerät nach Anspruch 2, bei welchem der Kompass (3) ein Magnetkompass, ein als Kugelkompass ausgebildeter Magnetkompass, der unabhängig von der Lage des Messgeräts arbeitet, oder ein digitaler Kompass ist.

5. Messgerät nach einem der Ansprüche 1 bis 4, bei welchem die Wasserwaage mindestens eine Röhrenlibelle (11, 12) und/oder mindestens eine Dosenlibelle, und/oder mindestens eine digitale Libelle aufweist.

6. Messgerät nach einem der Ansprüche 1 bis 5, bei welchem die Libelle (11, 12) bzw. die Libellen (11, 12) und/oder der Kompass (3) im Messgerät (1) drehbar gelagert angeordnet sind.

7. Verwendung eines Messgeräts (1) nach einem der Ansprüche 1 bis 6 zum Ausrichten eines ersten Objekts zum Ausrichten nach einer Kante oder einer Fläche eines zweiten Objekts, nach folgenden Verfahrensschritt;
bestimmen des Azimuts der Kante oder der Fläche des zweiten Objekts, bezogen auf eine Messfläche (13, 14, 15, 16, 17, 18) des Messgeräts (1);
positionieren des Messgeräts (1) beim ersten Objekt und Ausrichten dieser Messfläche (13, 14, 15, 16, 17, 18) des Messgeräts (1) nach dem Azimut der Kante oder der Fläche des zweiten Objekts;
anlegen der auszurichtenden der Kante oder Fläche des ersten Objekts an die nach dem Azimut der Kante oder der Fläche des zweiten Objekts ausgerichtete Messfläche (13, 14, 15, 16, 17, 18) des Messgeräts (1).

8. Ausrichten von Objekten in Räumen unter Verwendung eines Messgeräts (1) nach einem der Ansprüche 1 bis 6.

9. Ausrichten von Objekten in Räumen, insbesondere Ausrichten Gegenständen der Einrichtung von Räumen, insbesondere von Beleuchtungskörpern an der Decke von Räumen mit einem Messgerät (1) nach einem der Ansprüche 1 bis 6 und der Verwendung des Messgeräts (1) gemäss Anspruch 7.
